# EUROPEAN PATENT SPECIFICATION

(11) **EP 0 425 705 B1**
(45) Date of publication and mention of the grant of the patent: **15.02.1995**
(21) Application number: 90907448.6
(22) Date of filing: 22.05.1990
(51) Int. Cl.: G11B 5/588, G11B 15/61

(54) **HELICAL SCAN-TYPE ROTARY HEAD DRUM UNIT**
ROTIERENDE KOPFTROMMELEINHEIT VOM SCHRAUBENABTASTTYP
UNITE DE TAMBOUR A TETE ROTATIVE DU TYPE A BALAYAGE HELICOIDAL

(30) Priority: 22.05.1989 JP 126666/89
(43) Date of publication of application: 08.05.1991
(73) Proprietor: NIPPON HOSO KYOKAI, Tokyo 150 (JP); KABUSHIKI KAISHA SANKYO SEIKI SEISAKUSHO, Suwa-gun Nagano 393 (JP)
(72) Inventor: KATOU, Daiichirou Nippon Hoso Kyokai Hoso Gijutsu, Setagaya-ku Tokyo 157 (JP); YANAGISAWA, Hitoshi Nippon Hoso Kyokai Hoso, Setagaya-ku Tokyo 157 (JP); SEKIGUCHI, Takuji Nippon Hoso Kyokai Hoso Gijutsu, Setagaya-ku Tokyo 157 (JP); OKINA, Toshihiko Kabushiki Kaisha Sankyo Seiki, Komagane-shi Nagano 399-41 (JP); KOBAYASHI, Kazuo Kabushiki Kaisha Sankyo Seiki, Suwa-gun Nagano 393 (JP)
(74) Representative: Dealtry, Brian
(86) International application number: JP9000652
(87) International publication number: WO9014660

(56) References cited:
- DE-B- 1 131 421
- GB-A- 931 752
- JP-A-60 115 043
- JP-U-60 106 233

## Description

### TECHNICAL FIELD

The present invention relates to a rotary drum unit in a helical scan type magnetic recording/reproducing device for use in a video tape recorder, digital audio tape recorder, or the like. The invention is particularly directed to a tape drive system in the rotary drum unit which calls for stable run of a tape and highly accurate formation thereon of track patterns, such as a thin tape drive system or a tape transport system for broadcasting use.

According to a convention helical scan type magnetic recording/reproducing device employed in video tape and digital audio tape recorders, the formation of track patterns on the tape is attained by such a mechanical head scan wherein the edge of the tape is mechanically forced to run along the lead of the rotary head drum to restraining the tape upon the drum in its widthwise direction.

However, since the position of the tape widthwise thereof on the rotary drum is mechanically controlled by holding the tape edge along the lead of the drum, there is the possibility that, for instance, when the tape greatly deviates widthwise thereof in the tape transport system, the lead causes nonlinearfriction to the tape edge, which makes unstable the tape run, giving rise to a jitter, or in a worse case, inflicting a damage to the tape edge. This phenomenon is noted frequently with the tendency toward an increasingly reduced thickness of the tape and creates an obstacle against the thin formation of the tape for more recording capacity as well as against the narrow formation of tracks for high density recording, for which demands have been grown recently.

One prior art solution of the problems cited above is disclosed in JP-A- 60-106 233, where one single optical sensor is mounted on the rotating part of the drum in order to sense the actual position of the tape edge.

### DISCLOSURE OF THE INVENTION

It is an object of the present invention to provide a rotary drum unit which ensures stable run of the tape without damage thereto and permits formation of highly accurate track patterns.

To achieve such object, according to the present invention, in a helical scan type rotary drum unit based on a dynamic tracking control system, in which an actuator is driven to cause a rotary head to move in an axial direction of a drum, there are disposed a plurality of position sensors along a virtual lead corresponding to a standard running position of at least one edge of a tape upon the drum, by means of which sensors, is detected a deviation amount at which the tape being run is deviated from the virtual lead, and responsive to detection signals from the sensors, the actuator for dynamic tracking use is driven to move the rotary head in the axial direction of the drum, thereby correcting a running position of the rotary head and scanning the tape.

With such a construction, a deviation of the tape upon the drum, which occurrs widthwise of the tape, is to be detected by the sensors, and responsive to the tape deviation amount detected thereby, the actuator for dynamic tracking use is driven to move the rotary head in the axial direction of the drum. Then, the rotary head is displaced a distance equal to such deviation amount of the tape on the drum, and thus positioned as predetermined. This brings about the same state as that in which the tape runs along the virtual lead, and hence produces the same effect as that obtainable by mechanically controlling the tape edge along a lead provided therefor.

Accordingly, even in the case of a thin tape having no rigidity and thus difficult of mechanical position control, the present invention can be applied thereto, ensuring extremely stable and accurate tape run and permitting formation of track patters with high precision without inflicting any damage to the tape or disturbing the tape run.

### BRIEF DESCRIPTION OF THE DRAWINGS

Fig. 1 is a perspective view illustrating an embodiment of a rotary head drum unit in accordance with the present invention;
Fig. 2A is a perspective view showing the state of travel of the tape around the rotary drum unit depicted in Fig. 1;
Fig. 2B is a graph showing a locus drawn by the rotary head;
Fig. 3 is a block diagram illustrating an embodiment of a control system; and
Fig. 4 is a perspective view illustrating another embodiment of the mechanism of the present invention as applied to a drum unit of the type rotating an intermediate drum.

### BEST MODE FOR CARRYING OUT THE

### INVENTION

The constitution of the present invention will hereinafter be described in detail with reference to the embodiments shown in the drawings.

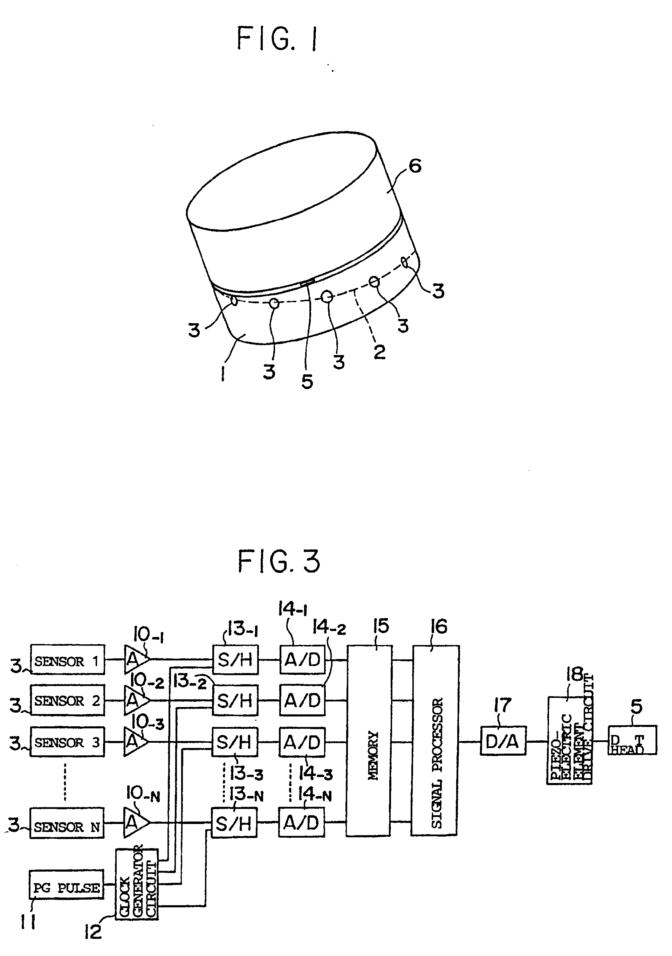

Fig. 1 illustrates, in perspective, an embodiment of the present invention. This embodiment is a rotary head drum unit of the type in which a rotary head is fixed to the upper drum and is driven as a unitary structure therewith through a dynamic tracking actuator (not shown). This rotary head drum unit has a plurality of sensors 3, ..., 3 embedded in its lower drum 1 along a virtual lead 2, instead of along the conventional lead, for detecting a position of the lower edge 8 of a tape 4. The virtual lead 2 mentioned herein is imaginarily indicative of the position where such tape edge 8 is located during a standard running of the tape 4, and thus corresponds to a position of the lead of a conventional rotary head drum.

The position sensors 3, ..., 3 are photosensors such as photo-diodes. The photosensors 3,..., 3 detect a position of the tape edge 8, sensitive to a light, which is received by them from a light source (not shown) disposed around the drum 1, being changed in quantity by interception of the tape 4, and the surfaces of the photosensors are so treated to be failure- free against sliding thereon of the tape 4 as to avoid any adverse effect upon the tape running behaviour. The outputs of the photosensors (light receiving elements) 3, ..., 3 are fed back to the dynamic tracking actuator to control the axial displacement of the rotary head 5; namely, its displacement in the direction of tracking. In other words, in the event that the tape deviation is detected by the photosensors, the tracking is carried out to bring the head 5 to a predetermined position; i.e. the position where the tape 4 ought to run along the virtual lead 2, thereby offsetting the deviation of the tape 4 running on the lower drum 1 from the virtual lead 2. The dynamic tracking actuator is usually a piezoelectric element, for instance. Further, known dynamic tracking heads are disclosed in, for example, the Japanese Pat. Pub. Nos. 56568/87 and 42335/87, the Japanese U.M. Pub. No. 32345/87, etc.

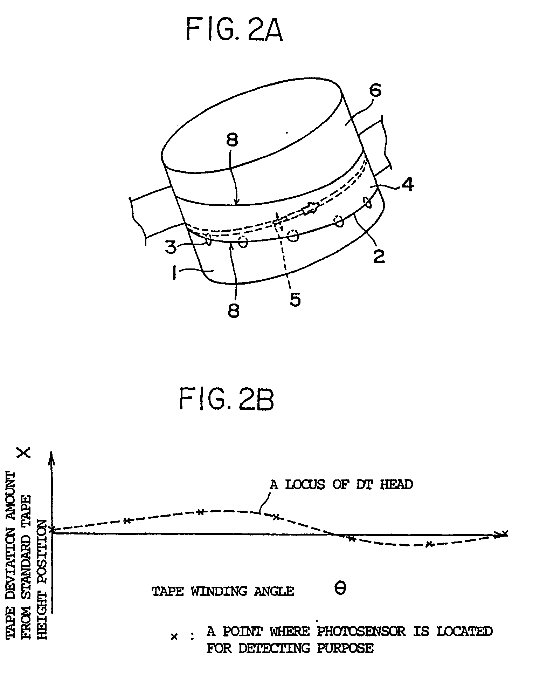

With the rotary head drum unit constructed as above, referring to Fig. 2, a drive of the tape 4 therearound along the virtual lead 2 assumable from the photosensors 3, ..., 3 places at work the feedback by those photosensors responsive to a deviation of the tape 4 from the virtual lead 2 (or standard position of the tape in its heightwise direction) to control the dynamic tracking actuator associated with the head 5, whereby the head 5 is to be moved upwardly and downwardly, which can be depicted in Fig. 2B to draw a locus passing through points x where the photosensors are located for detecting purpose. Hence, the tape 4 shows its run along the virtual lead 2 in such a manner as if it was guided mechanically by a lead.

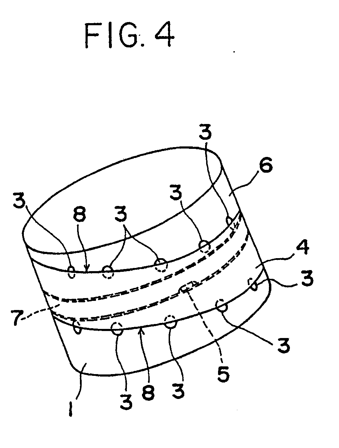

Fig. 3 illustrates an embodiment of a control system. Each deviation amount occurred by the tape 4 being deviated from the standard height position, which is detected by the respective sensors 3, ..., 3 in the order of discrete values at the respective corresponding points upon the tape, is amplified by means of amplifiers 10ᵢ, 10₂, 10₃, ..., 10_{N}, respectively. The thus-amplified outputs, representing the tape deviations, are sampled and held in sample-and-hold circuits 13₁, 13₂, 13₃, ..., 13 _{N} in accordance with a clock which is generated by a clock generator 2 in synchronism with one or two pulses from a drum pulse generator 11, the pulses being produced therefrom per rotation of the rotary head and representing a standard rotation position of the rotary head. Then, such outputs in the sample-and-hold circuits are transformed into digital signals by means of the A/D converters 14₁, 14₂, 14₃, ..., 14_{N}, and thereafter stored in memory 14. Depending on the deviation amounts obtained or the position data, a high-order interpolation is performed by a signal processor 16 to produce a control signal for driving the dynamic tracking piezoelectric element. The control signal is sent through a D/A converter 17 and a piezoelectric element drive circuit 18 so as to cause the head 5 to move upwardly or downwardly. In this connection, the timing for sampling and holding each sensor output may be delayed according to the actual condition of operation, and in the signal processor 16, may also be employed a linear interpolation or other similar interpolation methods.

Fig. 4 illustrates another embodiment of the present invention applied to a rotary drum unit of the type in which a rotary head drum 7 is interposed between the upper and lower drums 1 and 6 which are stationary. In both of the lower and upper drums 1 and 6, there are embedded the photosensors 3, ..., 3 along virtual lead lines 2 so that a differential output is obtain, using upper and lower edges 8, 8 of the tape to provide for increased accuracy in sensing the position. The rotary head 5 is coupled to a rotary head drum 7 through the dynamic tracking actuator.

While in the above the present invention has been described with reference to its preferred embodiments, the invention is not limited specifically thereto but various modifications may be effected without departing from the scope of the subject matter of the invention. For example, in the above- described embodiments the photosensors 3, ..., 3 are embedded in the drums 1 and 6, but his should not be construed as limiting the invention and, though not shown, it is also possible to employ an arrangement wherein position sensors, for example, reflecting type photosensors are disposed outside of the drum 1 or 6 in an opposing relation with the virtual lead 2, and the tape 4 runs in the space between the photosensors 3, ..., 3 and the drums 1, 6. Each of the reflecting-type photosensors has a light receiving element and a light emitting element disposed facing toward the boundary between the tape edge 8 and the peripheral surface of the drum in such a manner that the light receiving and emitting elements are axially symmetrical with respect to a line passing through a certain point on the virtual lead 2 and the axis of the drum. With such arrangement, any variations in reflected light at the boundary between the tape edge 8 and the peripheral surface of the drum are to be sensed by those elements to detect the position of the tape edge 8. This arrangement is also applicable to a rotary head drum unit of the type rotating the upper drum 6 in order to permit its detecting the deviation of the tape edge 8 upon the upper drum 6.

It is noted that the foregoing sensors 3, ..., 3, which detect the position of the tape edge, may be formed, using MR elements, CCD line sensors or other similar sensors.

### INDUSTRIAL APPLICABILITY

The present invention is particularly suitable for use with a rotary drum unit in a tape drive system which calls for stable tape run and highly accurate formation of track patterns, such as a helical scan type magnetic recording/reproducing device which is used for a thin tape transport or for broadcasting purpose.

## Claims

1. A helical scan type rotary drum unit based on a dynamic tracking control system, in which an actuator is driven to cause a rotary head to move in an axial direction of a drum, characterized in that a plurality of position sensors are disposed along a virtual lead corresponding to a standard running position of at least one edge of a tape upon said drum, that deviation amount at which said tape being run is deviated from said virtual lead is detected by means of said sensors, and that, responsive to detection signals from said sensors, said actuator for dynamic tracking use is driven to move said rotary head in the axial direction of said drum, thereby correcting a running position of said rotary head and scanning said tape.

2. The helical scan type rotary drum unit as set forth in Claim 1, characterized in that said drum is provided in a stationary state, and further has, embedded therein, said plurality of position sensors.

3. The helical scan type rotary drum unit as set forth in Claim 1, characterized in that said rotary head drum with said rotary head mounted hereon is interposed between fixed upper and lower drums, and that said fixed upper and lower drums each heave, embedded therein, a plurality of position sensors, whereby a differential output is obtained at upper and lower edges of said tape.

4. The helical scan type rotary drum unit as set forth in Claim 1, characterized in that said plurality of position sensors are disposed outside of said drum and arranged along said virtual lead, and that said tape runs in a space between said position sensors and said drum.

## Patentansprüche

1. Rotierende Trommeleinheitvom Schraubenabtasttyp basierend auf einem dynamischen Spursteuersystem, in dem ein Stellelement betrieben ist, um einen rotierenden Kopf in einer axialen Richtung einer Trommel zu bewegen, dadurch gekennzeichnet, daß eine Vielzahl von Positionssensoren entlang einer virtuellen Führung entsprechend einer Standardlaufposition von mindestens einer Kante des Bandes auf der Trommel angeordnet ist, daß der Abweichungsbetrag, mit dem das laufende Band von der virtuellen Führung abgeweicht, mit Hilfe der Sensoren detektiert ist, und daß, ansprechend auf Detektionssignale der Sensoren, das Stellelement zum dynamischen Spuren angetrieben ist, um den rotierenden Kopf in der axialen Richtung der Trommel zu bewegen, wodurch eine Laufposition des rotierenden Kopfes korrigiert und das Band abgetastet ist.

2. Rotierende Trommeleinheitvom Schraubenabtasttyp nach Anspruch 1, dadurch gekennzeichnet, daß die Trommel in einem stationären Zustand vorliegt und darüberhinaus, in ihr eingebettet, die Vielzahl von Positionssensoren hat.

3. RotierendeTrommeleinheitvomSchraubenabtasttyp nach Anspruch 1, dadurch gekennzeichnet, daß die rotierende Kopftrommel mit dem darauf montierten, rotierenden Kopf zwischen den festen, oberen und unteren Trommeln eingefügt ist, und daß die festen oberen und unteren Trommeln, jeweils in ihnen eingebettet, eine Vielzahl von Positionssensoren haben, wodurch ein differentieller Ausgang an der oberen und unteren Kante des Bandes erhalten ist.

4. Rotierende Trommeleinheitvom Schraubenabtasttyp nach Anspruch 1, dadurch gekennzeichnet, daß die Vielzahl von Positionssensoren an der Außenseite der Trommel angebracht und entlang der virtuellen Führung angeordnet sind, und daß das Band in einem Bereich zwischen den Positionssensoren und der Trommel läuft.

## Revendications

1. Unité de tambour rotatif du type à balayage hélicoïdal basée sur un système de commande de suivi dynamique de piste, dans lequel un dispositif de mise en oeuvre est piloté pour obliger une tête rotative à se déplacer dans une direction axiale d'un tambour, caractérisée en ce qu'une pluralité de détecteurs de position est disposée le long d'un guide virtuel correspondant à une position d'avancement standard d'au moins un bord de la bande sur ledit tambour, en ce que la quantité d'écart, dont ladite bande en train d'avancer est déviée du guide virtuel, est détectée au moyen desdits détecteurs, et en ce que, sensible aux signaux de détection en provenance desdits détecteurs, ledit dispositif de mise en oeuvre pour usage de suivi dynamique de piste, est piloté pour déplacer ladite tête rotative dans la direction axiale dudit tambour, corrigeant ainsi une position d'avancement de ladite tête rotative et balayant ladite bande.

2. Unité de tambour rotatif du type à balayage hélicoïdal selon la revendication 1, caractérisée en ce que ledit tambour est prévu dans un état immobile et, de plus a, encastrée dans ce dernier, ladite pluralité de détecteurs de position.

3. Unité de tambour rotatif du type à balayage hélicoïdal selon la revendication 1, caractérisée en ce que ledit tambour à tête rotative avec ladite tête rotative montée dessus, est intercalé entre les tambours supérieur et inférieur fixés, et en ce que lesdits tambours supérieur et inférieur fixés possèdent chacun, encastrée dans ces derniers, une pluralité de détecteurs de position de sorte qu'une sortie différentielle est obtenue au niveau des bords supérieur et inférieur de ladite bande.

4. Unité de tambour rotatif du type à balayage hélicoïdal selon la revendication 1, caractérisée en ce que ladite pluralité de détecteurs de position est disposée à l'extérieur dudit tambour et est agencée le long dudit guide virtuel, et en ce que ladite bande avance dans un espace entre lesdits détecteurs de position et ledit tambour.
